# EUROPÄISCHE PATENTSCHRIFT

(11) **EP 3 935 332 B1**
(45) Veröffentlichungstag und Bekanntmachung des Hinweises auf die Patenterteilung: **07.12.2022**
(21) Anmeldenummer: 20707129.1
(22) Anmeldetag: 04.03.2020
(51) Int. Cl.: F27B 1/00, C04B 2/12, F27D 7/02, F27D 99/00, F27B 1/10

(54) **VERFAHREN UND SCHACHTOFEN ZUM BRENNEN VON KARBONHALTIGEM MATERIAL IN EINEM SCHACHTOFEN**
METHOD AND SHAFT FURNACE FOR BURNING CARBON-CONTAINING MATERIAL IN A SHAFT FURNACE
PROCÉDÉ ET FOUR À CUVE POUR LA COMBUSTION DE MATIÈRES CONTENANT DU CARBONE DANS UN FOUR À CUVE

(30) Priorität: 08.03.2019 DE 102019203210; 08.03.2019 BE 201905148
(43) Veröffentlichungstag der Anmeldung: 12.01.2022
(73) Patentinhaber: Maerz Ofenbau AG, 8002 Zürich (CH); thyssenkrupp AG, 45143 Essen (DE)
(72) Erfinder: PIRINGER, Hannes, 5712 Beinwil am See (CH); BUCHER, Patrick, 5012 Schönenwerd (CH)
(74) Vertreter: thyssenkrupp Intellectual Property GmbH
(86) Internationale Anmeldenummer: PCT/EP2020/055742
(87) Internationale Veröffentlichungsnummer: WO 2020/182584

(56) Entgegenhaltungen:
- EP-A2- 1 148 311
- US-A- 3 085 022
- US-A1- 2018 283 788

## Beschreibung

Die Erfindung betrifft einen Schachtofen und ein Verfahren zum Brennen von karbonhaltigem Material.

Beim Brennen von stückigem Material besteht das Problem, die erforderliche Wärmemenge dem Material gleichmäßig zuzuführen, so dass jedes Korn bis zu seinem Kern durchgebrannt wird, ohne dass die Körner durch örtliche Überhitzung zusammensintern und im Ofen feste Brücken bilden. Dieses Problem ist besonders groß, wenn über einen Weichbrand hinausgehende, höhere Brenngrade verlangt werden.

Für kleinkörniges Brennmaterial und eine gleichmäßige Brenn- und damit Produktqualität sind Drehrohröfen am besten geeignet, da eine intensive Materialumwälzung einen guten und gleichmäßigen Wärmeübergang zu jedem Korn gewährleistet. Nachteilig ist jedoch, dass ihre Konstruktion sehr aufwendig ist und dass zu den entsprechend hohen Investitionskosten noch hohe Betriebskosten hinzukommen, bedingt durch hohen Verschleiß- und hohe Wärmeverluste durch Abstrahlung und durch Abgase, die sich bei der Anwendung höherer Temperaturen, wie sie für höhere Brenngrade bzw. andere Produktqualitäten, wie Mittel-, Hart- und Sinterbrand erforderlich sind, besonders stark auswirken. Drehrohröfen sind üblicherweise nur für das Brennen von Material mit einer Korngröße von 10mm bis 50mm geeignet noch kleinere und vor allem größere Körnungen können in Drehrohröfen nicht gebrannt werden.

Eine andere Methode, die zum Brennen erforderliche Wärmemenge dem Brenngut gleichmäßig zuzuführen, besteht im Beimischen von Brennstoff, d.h. von Hüttenkoks zum Brenngut in Mischfeueröfen. Mischfeueröfen sind jedoch nicht für kleinkörniges Brennmaterial geeignet. Außerdem haben sie den erheblichen Nachteil, dass die Asche der Koksverbrennung im fertig gebrannten Produkt verbleibt und somit zu einer mit Graufärbung verbundenen, minderen Produktqualität führt. Mischfeueröfen haben allerdings den Nachteil, dass sie sehr hohe Emissionen aufweisen. Prozessbedingt kommt es in Mischfeueröfen zur Bildung von einer erheblichen Menge an Kohlenmonoxid. Zusätzlich weisen Mischfeueröfen häufig sehr hohe Konzentrationen von organischen Kohlenwasserstoffen (TOC) sowie Schwefelwasserstoff (H2S) auf.

Eine weitere Möglichkeit zum Brennen von Material stellen Schachtöfen dar. Bei ihnen wird der Brennstoff durch in das Brenngut eintauchende Brennerlanzen zugeführt, die über den Schachtquerschnitt verteilt angeordnet sind. Bisher besteht bei solchen Öfen die nicht überwundene Schwierigkeit, eine gleichmäßige Temperaturverteilung über den Schachtquerschnitt zu erzielen und insbesondere ein Zusammensintern von Brennmaterial durch örtliche Überhitzungen zu vermeiden.

Aus der EP1148311B1 ist ein Verfahren zum Brennen von karbonathaltigem Material bekannt, wobei die Brennerlanzen verschiebbar angeordnet sind, um eine gleichmäßige Brenntemperatur in der betreffenden Schachtebene zu erreichen. Praktische Versuche haben jedoch gezeigt, dass dieses Verfahren nicht zielführend ist. Es bilden sich üblicherweise Bereiche sehr hoher Temperaturen an den wandnahen Bereichen des Schachtofens aus, wobei die Bereiche innerhalb des Schachtofens eine deutlich geringere Temperatur aufweisen. Durch diesen Effekt wird keine homogene Produktqualität erreicht, da das Material über den Schachtquerschnitt mit unterschiedlichen Temperaturen gebrannt wird. Häufig kommt es auch dazu, dass die erforderliche Produktqualität nicht erreicht werden kann. Des Weiteren können Versuche, die Produktqualität in der Schachtmitte zu erreichen, zu Überhitzungen an der Außenseite des Schachtquerschnitts führen. Dabei kommt es beispielsweise zu Materialansätzen durch Sinterung von Staub oder Brennstoffasche oder sogar zu Schmelzphasen. Die Ansätze beeinflussen den Materialfluss negativ, wobei dieser durch die Schwerkraft erfolgt. Häufig entstehen durch die Ansätze auch Materialbrücken, die den Ofendurchfluss blockieren. Außerdem können die hohen Temperaturen an der Außenseite des Schachtquerschnitts die feuerfeste Ausmauerung beschädigen.

Davon ausgehend ist es Aufgabe der vorliegenden Erfindung, einen Schachtofen, sowie ein Verfahren zum Brennen von karbonhaltigem Material bereitzustellen, wobei eine gleichmäßige Temperaturverteilung über den Schachtquerschnitt auf möglichst einfache Weise erreicht wird.

Diese Aufgabe wird erfindungsgemäß durch eine Vorrichtung mit den Merkmalen der unabhängigen Vorrichtungsansprüche 1 und 7, sowie durch ein Verfahren mit den Merkmalen der unabhängigen Verfahrensansprüche 12 und 14 gelöst. Vorteilhafte Weiterbildungen ergeben sich aus den abhängigen Ansprüchen.

Ein Schachtofen zum Brennen von insbesondere karbonhaltigem Material umfasst nach einem ersten Aspekt in Strömungsrichtung des Materials eine Vorwärmzone, mindestens eine Brennzone, eine Kühlzone und einen Materialauslass zum Auslassen des Materials aus dem Schachtofen. Der Schachtofen weist auch eine Mehrzahl von Brennerlanzen auf, die in die Brennzone hineinragen, wobei zumindest eine Brennerlanze eine erste Einstecktiefen in die Brennzone und zumindest eine weitere Brennerlanze eine zweite Einstecktiefe in die Brennzone aufweist, die größer ist als die erste Einstecktiefe. Der Schachtofen weist auch zumindest eine Primärluftleitung auf zum Leiten von Verbrennungsluft, die mit zumindest einer Brennerlanze in Verbindung steht. Des Weiteren weist der Schachtofen eine Sauerstoffleitung auf zum Leiten von Sauerstoff in die Brennzone, wobei die Sauerstoffleitung derart angeordnet ist, dass Sauerstoff von der Sauerstoffleitung zu zumindest einer Brennerlanze der zweiten Einstecktiefe strömt.

Bei dem zu brennenden Material handelt es sich beispielsweise um körniges Material mit einer für Korngröße von10 bis 50mm, vorzugsweise 40 bis 80mm, insbesondere 30 bis 60 mm.

Die Vorwärmzone schließt sich vorzugsweise direkt an einen Materialeinlass des Materials in den Schachtofen an und dient der Vorwärmung des Materials auf eine Temperatur von etwa 600°C bis 800°C. Die Brennzone schließt sich vorzugsweise direkt an die Vorwärmzone an und dient dem Brennen des Materials, wobei dieses vorzugsweise auf eine Temperatur von etwa 1200°C bis 1800°C erhitzt wird. Die Kühlzone schließt sich vorzugsweise direkt an die Brennzone an und dient der Kühlung des gebrannten Materials auf eine Temperatur von beispielsweise 100 °C. Der Materialauslass ist beispielsweise in einem sich die Kühlzone anschließenden Auslasstrichter angeordnet, wobei der Materialauslass beispielsweise einen Drehteller oder einen Schubtisch aufweist zum Austragen von Material aus der Kühlzone in den Auslasstrichter. Die Brennerlanzen sind vorzugsweise rohrförmig ausgebildet und dienen dem Leiten von Brennstoff in die Brennzone.

Die Sauerstoffleitung weist beispielsweise eine Sauerstofflanze auf, die sich in die Brennzone des Schachtofens erstreckt und einen Auslass zum Auslassen von Sauerstoff in die Brennzone aufweist. Vorzugsweise ist die Sauerstofflanze an der Brennerlanze der zweiten Einstecktiefe oder direkt unterhalb der Brennerlanze angebracht. Es ist ebenfalls denkbar, dass die Sauerstofflanze durch die Brennerlanze verläuft. Die Brennerlanze weist insbesondere auch eine Auslassöffnung zum Einlassen von Brennstoff in die Brennzone auf. Vorzugsweise ist die Brennerlanze jedoch so ausgeführt, dass Sauerstoff zusammen mit Verbrennungsluft und Brennstoff durch die Brennerlanze strömt.

Eine Sauerstoffleitung zum Leiten von Sauerstoff in die Brennzone bietet den Vorteil einer verbesserten Verbrennung des Brennstoffs der Brennerlanzen der zweiten Einstecktiefe, wobei sichergestellt wird, dass in der Brennzone, vorzugsweise an dem in der Brennzone angeordneten Auslass der Brennerlanzen, eine ausreichende Menge an Sauerstoff vorhanden ist, um eine Verbrennung des Brennstoffs sicherzustellen. Durch das Leiten von Sauerstoff zu einer Brennerlanze der zweiten Einstecktiefe wird außerdem eine Verbrennung des Brennstoffs der Brennerlanze mit der zweiten, tieferen Einstecktiefe verbessert. Dies führt zu einer gezielten Temperaturerhöhung in dem mittigen Bereich des Schachtofens, sodass einem Temperaturgefälle vom Wandbereich des Schachtofens zur Schachtofenmitte entgegengewirkt wird. Ein solcher Schachtofen ermöglicht eine über den Querschnitt des Schachtofens im Wesentlichen konstante Temperaturverteilung, wodurch ein gleichmäßiges Brennen des Materials in dem Schachtofen erreicht wird.

Die Sauerstoffleitung steht vorzugsweise direkt, mit zumindest einer Brennerlanze der zweiten Einstecktiefe in Verbindung, sodass Sauerstoff zur Verbrennung von Brennstoff in die Brennerlanze strömt. Insbesondere steht die Sauerstoffleitung mit allen Brennerlanzen der zweiten einstecktiefe in Verbindung. Vorzugsweise ist die Sauerstoffleitung nicht mit den Brennerlanzen der ersten Einstecktiefe verbunden. Die Sauerstoffleitung ist gemäß einer weiteren Ausführungsform ausschließlich mit den Brennerlanzen der zweiten Einstecktiefe verbunden. Die Brennerlanze weist beispielsweise einen Einlass zum Einlassen von Sauerstoff auf, in dem die Sauerstoffleitung angeordnet ist. Dadurch wird sichergestellt, dass der Sauerstoff zu der Brennerlanze und vorzugsweise ausschließlich zu der Brennerlanze der zweiten Einstecktiefe geleitet wird.

Die Sauerstoffleitung weist gemäß einer weiteren Ausführungsform ein Mittel zum Regeln der Menge an durch die Sauerstoffleitung strömendem Sauerstoff auf. Bei dem Mittel handelt es sich beispielsweise um ein insbesondere einstellbares Ventil. Dies ermöglicht ein gezieltes Einstellen der Sauerstoffmenge in der Brennzone des Schachtofens.

Gemäß einer weiteren Ausführungsform umfasst die Primärluftleitung eine erste Primärluftleitung zum Leiten von Verbrennungsluft, die mit der Brennerlanze der ersten Einstecktiefe in Verbindung steht und eine zweite Primärluftleitung zum Leiten von Verbrennungsluft, die mit der Brennerlanze der zweiten Einstecktiefe in Verbindung steht, wobei die Sauerstoffleitung ausschließlich mit der zweiten Primärluftleitung verbunden ist, sodass Sauerstoff von der Sauerstoffleitung in die zweite Primärluftleitung strömt. Die erste Primärluftleitung ist vorzugsweise ausschließlich mit den Brennerlanzen der ersten Einstecktiefe verbunden, wobei die zweite Primärluftleitung ausschließlich mit den Brennerlanzen der zweiten Einstecktiefe verbunden ist. Dadurch wird es ermöglicht den Brennerlanzen der ersten und der zweiten Einstecktiefe unterschiedliche Mengen an Sauerstoff zuzuführen.

Gemäß einer weiteren Ausführungsform ist eine weitere Brennerlanze vorgesehen, die eine dritte Einstecktiefe in die Brennzone aufweist, die größer ist als die erste und geringer als die zweite Einstecktiefe und wobei die Sauerstoffleitung mit zumindest einer Brennerlanze der dritten Einstecktiefe in Verbindung steht, sodass Sauerstoff in die Brennlanze strömt. Vorzugsweise ist die Sauerstoffleitung ausschließlich mit den Brennerlanzen der zweiten und dritten Einstecktiefe und nicht mit denen der ersten Einstecktiefe verbunden.

Das Mittel ist gemäß einer weiteren Ausführungsform derart ausgebildet, dass die Menge an Sauerstoff zu der zumindest einen Brennerlanze der zweiten Einstecktiefe größer ist als die Menge an Sauerstoff zu der zumindest einen Brennerlanze der dritten Einstecktiefe. Vorzugsweise wird der Brennerlanze mit der größten Einstecktiefe die größte Menge an Sauerstoff zugeführt.

Die Erfindung umfasst auch einen Schachtofen zum Brennen von insbesondere karbonathaltigem Material aufweisend in Strömungsrichtung des Materials eine Vorwärmzone, mindestens eine Brennzone, eine Kühlzone, und einen Materialauslass zum Auslassen des Materials aus dem Schachtofen, eine Mehrzahl von Brennerlanzen, die in die Brennzone hineinragen, wobei zumindest eine Brennerlanze eine erste Einstecktiefen in die Brennzone und zumindest eine weitere Brennerlanze eine zweite Einstecktiefe in die Brennzone aufweist, die größer ist als die erste Einstecktiefe. Der Schachtofen weist auch eine erste Primärluftleitung zum Leiten von primärer Verbrennungsluft, die mit zumindest einer Brennlanze der ersten Einstecktiefe in Verbindung steht und eine zweite Primärluftleitung auf zum Leiten von primärer Verbrennungsluft, die mit zumindest einer Brennerlanze der zweiten Einstecktiefe in Verbindung steht. Die zweite Primärluftleitung verläuft zumindest teilweise durch eine Vorwärmeinrichtung zum Erwärmen der Luft in der Primärluftleitung.

Der Schachtofen weist beispielsweise einen Schachtraum auf, der die Vorwärmzone, die Brennzone und die Kühlzone umfasst. Bei der Vorwärmeinrichtung handelt es sich beispielsweise um ein außerhalb des Schachtraums angeordnetes Aggregat, wie beispielsweise einen Wärmetauscher, zum Erwärmen der Primärluft. Die mit Bezug auf den Schachtofen voran genannten Ausführungen und Vorteile treffen auch auf den Schachtofen mit der Vorwärmeinrichtung zu. Der Schachtofen mit Vorwärmeinrichtung weist beispielsweise die voran beschriebene Sauerstoffleitung auf.

Eine Vorwärmung der Primärluft der zweiten Primärluftleitung bietet den Vorteil einer verbesserte Verbrennung des Brennstoffs der Brennerlanzen der zweiten Einstecktiefe, wobei sichergestellt wird, dass in der Brennzone, vorzugsweise an dem in der Brennzone angeordneten Auslass der Brennerlanzen, eine optimale Temperatur herrscht, um eine Verbrennung des Brennstoffs sicherzustellen. Durch das Vorwärmen von Primärluft zu einer Brennerlanze der zweiten Einstecktiefe wird außerdem eine Verbrennung des Brennstoffs der Brennerlanze mit der zweiten, tieferen Einstecktiefe verbessert. Dies führt zu einer gezielten Temperaturerhöhung in dem mittigen Bereich des Schachtofens, sodass einem Temperaturgefälle vom Wandbereich des Schachtofens zur Schachtofenmitte entgegengewirkt wird. Ein solcher Schachtofen ermöglicht eine über den Querschnitt des Schachtofens im Wesentlichen konstante Temperaturverteilung, wodurch ein gleichmäßiges Brennen des Materials in dem Schachtofen erreicht wird.

Die Vorwärmeinrichtung umfasst gemäß einer weiteren Ausführungsform die Vorwärmzone innerhalb des Schachtofens, wobei die Primärluftleitung zumindest teilweise durch Vorwärmzone verläuft. Dadurch wird eine besonders kompakte und energieeffiziente Bauweise des Schachtofens realisiert, wobei die Vorwärmzone als Wärmetauscher mit der Primärluftleitung dient.

Gemäß einer weiteren Ausführungsform ist die zweite Primärluftleitung ausschließlich mit zumindest einer Brennerlanze der zweiten Einstecktiefe verbunden, sodass die vorgewärmte primäre Verbrennungsluft ausschließlich Brennerlanzen der zweiten Einstecktiefe zugeführt wird.

Die zweite Primärluftleitung weist gemäß einer weiteren Ausführungsform eine Mehrzahl von Tauchleitungen auf, die sich zumindest teilweise oder vollständig durch die Vorwärmzone erstrecken. Bei den Tauschleitungen handelt es sich beispielsweise um eine Mehrzahl von konzentrisch zueinander angebrachten Rohrleitungen mit unterschiedlichem Durchmesser, in den die Primärluft strömt. Die Tauchleitung weist beispielsweise eine u-Form auf.

Die erste Einstecktiefe beträgt gemäß einer weiteren Ausführungsform maximal ein Drittel des Radius der Brennzone, insbesondere etwa 5 bis 20cm, vorzugsweise 10 bis 15cm. Gemäß einer weiteren Ausführungsform beträgt die zweite Einstecktiefe etwa ein Drittel des Radius der Brennzone, insbesondere etwa 40 bis 80cm, vorzugsweise 50 bis 70cm, insbesondere 60cm.

Eine solche Einstecktiefe stellt die optimale Tiefe dar, um eine im Wesentlichen gleichmäßige Temperaturverteilung über den Schachtofenquerschnitt zu ermöglichen.

Die Erfindung umfasst auch ein Verfahren zum Brennen von insbesondere karbonathaltigem Material in einem Schachtofen, mit Schwerkraftförderung durch eine Vorwärmzone, mindestens eine Brennzone, und eine Kühlzone zu einem Materialauslass, wobei eine Brennstoffzufuhr in der Brennzone oder angrenzend an diese über eine Mehrzahl von Brennlanzen erfolgt, wobei zumindest eine Brennerlanze eine erste Einstecktiefe und eine weitere Brennerlanze eine zweite Einstecktiefe aufweist, die größer ist als die erste Einstecktiefe und wobei primäre Verbrennungsluft zu den Brennerlanzen geleitet wird. Das Verfahren umfasst auch, dass Sauerstoff zusätzlich zu der primären Verbrennungsluft und/ oder in eine Primärluftleitung zum Leiten von Verbrennungsluft zu den Brennerlanzen der zweiten Einstecktiefe geleitet wird.

Die mit Bezug auf den Schachtofen zum Brennen von insbesondere karbonathaltigem Material beschrieben Ausführungen und Vorteile treffen in verfahrensgemäßer Entsprechung auch auf das Verfahren zum Brennen von insbesondere karbonathaltigem Material in einem Schachtofen zu.

Gemäß einer Ausführungsform wird die primäre Verbrennungsluft derart mit Sauerstoff angereichert, dass sie einen Sauerstoffgehalt von 40% bis 90% aufweist.

Die Erfindung umfasst auch ein Verfahren zum Brennen von insbesondere karbonathaltigem Material in einem Schachtofen, mit Schwerkraftförderung durch eine Vorwärmzone, mindestens eine Brennzone und eine Kühlzone wobei eine Brennstoffzufuhr in der Brennzone oder angrenzend an diese über eine Mehrzahl von Brennlanzen erfolgt, wobei zumindest eine Brennerlanze eine erste Einstecktiefe und eine weitere Brennerlanze eine zweite Einstecktiefe aufweist, die größer ist als die erste Einstecktiefe und wobei primäre Verbrennungsluft zu den Brennerlanzen geleitet wird, wobei die primäre Verbrennungsluft vorgewärmt wird. Die vorgewärmte primäre Verbrennungsluft wird ausschließlich den Brennerlanzen der zweiten Einstecktiefe zugeführt. Vorzugsweise wird die Primärluft zur Vorwärmung durch die Vorwärmzone geleitet.

Die mit Bezug auf den Schachtofen zum Brennen von insbesondere karbonathaltigem Material beschrieben Ausführungen und Vorteile treffen in verfahrensgemäßer Entsprechung auch auf das Verfahren zum Brennen von insbesondere karbonathaltigem Material in einem Schachtofen zu.

Gemäß einer Ausführungsform wird die primäre Verbrennungsluft derart vorgewärmt wird, dass sie eine Temperatur von 250°C bis 500°C aufweist.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Darstellung eines Schachtofens mit einer Sauerstoffleitung in einer Schnittansicht gemäß einem Ausführungsbeispiel.
Fig.2 und Fig.3 zeigt eine schematische Darstellung eines Schachtofens in einer Querschnittsansicht gemäß unterschiedlicher Ausführungsformen.
Fig. 4 zeigt eine schematische Darstellung eines Schachtofens mit einer Primärluftvorwärmung in einer Schnittansicht gemäß einem Ausführungsbeispiel.

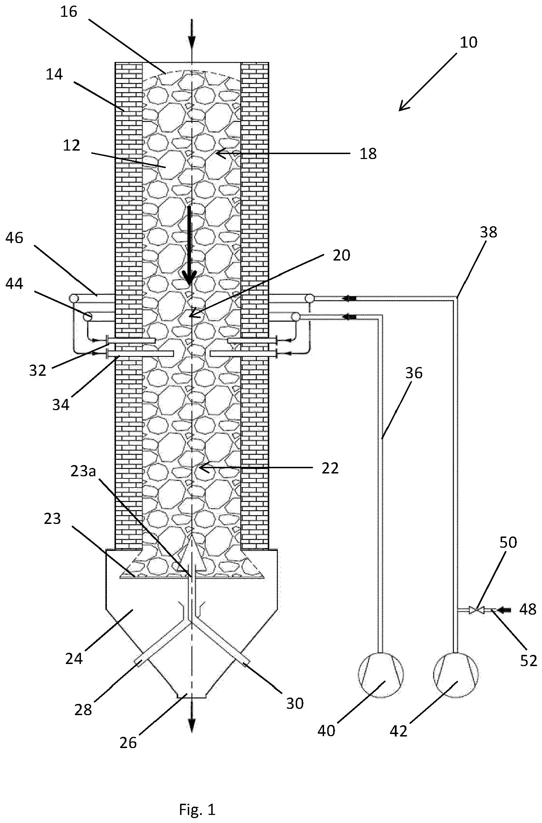

Fig. 1 zeigt einen Schachtofen 10 zum Brennen von beispielsweise karbonhaltigem Material, mit einer Korngröße von etwa von10 bis 50mm, vorzugsweise 40 bis 80mm, insbesondere 30 bis 60 mm. Der Schachtofen 10 weist einen Schachtraum 12 auf, der sich vorzugsweise in vertikaler Richtung erstreckt und beispielsweise einen konstanten Querschnitt oder einen Querschnitt aufweist, welcher sich in Flussrichtung des Brenngutes erweitert. Beispielsweise weist der Schachtraum 12 einen runden, insbesondere kreisförmigen, oder eckigen, insbesondere viereckigen Querschnitt auf. Der Schachtraum 12 ist von einer Schachtwand 14 umgeben, die beispielsweise aus Stahl mit einer sich daran anschließenden gemauerten, feuerfesten Innenwand ausgebildet ist. Der Schachtraum 12 ist nach oben und unten offen ausgebildet, wobei der Schachtofen 10 einen Materialeinlass 16 aufweist, der als obere Öffnung des Schachtraumes 12 ausgebildet ist und sich vorzugsweise über den gesamten Querschnitt des Schachtraums 12 erstreckt. Der Materialeinlass 16 dient dem Einlassen von zu brennenden Material in den Schachtofen 10. Eine weitere Ausführungsform weist anstatt des in Fig. 1 dargestellten offenen Materialeinlasses 16 eine Materialschleuse auf, welche es ermöglicht, das Brenngut aus einer Materialzufördereinrichtung in den Ofenschacht einzuschleusen, wobei die Materialschleuse die Aufgabe hat, den Eintritt von Umgebungsluft in den Ofenkopf weitgehend zu verhindern. Diese Ausführungsform wird vorzugsweise dann verwendet, wenn das Ofenabgas eine hohe Kohlendioxidkonzentration und eine geringe Sauerstoffkonzentration aufweisen soll wie das für nachgeschaltete Prozesse wie zum Beispiel Mahltrocknung von Kohle, Rübenzuckerprozess, Sodaprozess oder für die Erzeugung von gefälltem Kalziumkarbonat erforderlich ist. Die Strömungsrichtung des Materials ist in Fig. 1 mit einem Pfeil dargestellt und verläuft vertikal von oben nach unten durch den Schachtofen 10.

In Strömungsrichtung des Materials weist der Schachtofen 10 eine sich an den Materialeinlass 16 anschließende Vorwärmzone 18, eine Brennzone 20 und eine Kühlzone 22 auf. An die Kühlzone 22 schließt sich der Auslasstrichter 24 an, der in einem Materialauslass 26 zum Auslassen des Materials aus dem Schachtofen 10 mündet. In dem Auslasstrichter 24 ist beispielhaft eine Austragsvorrichtung 23 angeordnet, die dem Auslassen von Material aus der Kühlzone 22 des Schachtofens 10 in den Auslasstrichter 24 dient. Bei der Austragsvorrichtung 23 handelt es sich beispielsweise um einen Drehteller oder einen Schubtisch. Unterhalb des Materialauslasses 26 befindet sich beispielsweise entweder eine dicht schließende Materialaustragsklappe oder nach Bedarf eine dicht schließende Materialschleuse. Das Material strömt im Wesentlichen schwerkraftbedingt durch den Schachtofen 10 und wird im Gegenstrom thermisch behandelt. Die Höhe des Schachtraums 12 ist vorzugsweise durch die verfahrensgemäß im Zusammenhang mit der Einstellung der Fördergeschwindigkeit mittels der Austragsvorrichtung 23 zu bestimmenden Verweilzeiten des Brennmaterials bestimmt. Diese Verweilzeiten verteilen sich auf die obere, sich an den Materialeinlass 16 anschließende Vorwärmzone 18, auf die nach unten folgende Brennzone 20 und die bis zur Austragsvorrichtung 23 verlaufende Kühlzone 22. Vorzugsweise wird in der Vorwärmzone 18 das Brenngut bis auf eine Temperatur von bis zu ca. 800°C vorgewärmt, wobei die Brennzone 20 beispielsweise eine Temperatur von 800°C bis 1800°C aufweist und in der Kühlzone das Brenngut wieder bis auf ca. 100°C abgekühlt wird.

Der Schachtofen 10 weist einen oder mehrere Lufteinlässe 28, 30 zum Einbringen von Luft in den Schachtofen 10 auf. Beispielhaft sind in dem Schachtofen 10 der Fig. 1 zwei Lufteinlässe 28, 30 angeordnet, die Luft in den Auslasstrichter 24 sowie in den Verdrängungskörper 23a einleiten. Vorzugsweise wird die Luft mit einem Überdruck von bis zu 500 mbar in den Auslasstrichter 24 beispielsweise in den Verdrängungskörper 23a eingeblasen. Die Luft wird im Folgenden als Sekundärluft bezeichnet. Die Sekundärluft durchströmt den Schachtofen 10, insbesondere den Schachtraum 12, von unten nach oben in vertikaler Richtung und im Gegenstrom zu dem Material. Der Materialeinlass 16 stellt beispielsweise gleichzeitig einen Luftauslass, genauer gesagt einen Auslass für das gesamte Ofenabgas des Schachtofens 10 dar.

Der Schachtofen 10 weist des Weiteren eine Mehrzahl von Brennerlanzen 32, 34 auf, die sich durch die Schachtwand 14 in die Brennzone 20 des Schachtraums 12 erstrecken. Beispielhaft sind die Brennerlanzen 32, 34 in Fig. 1 in zwei Ebenen angeordnet, wobei die Brennerlanzen 32 der oberen Ebene eine erste Einstecktiefe in den Schachtraum 12 aufweisen und die Brennerlanzen 34 der unteren Ebene eine zweite Einstecktiefe in den Schachtraum 12 aufweisen. Vorzugsweise ist die erste Einstecktiefe der Brennerlanzen 32 geringer als die zweite Einstecktiefe der Brennerlanzen 34 der unteren Ebene. Es ist ebenfalls denkbar, dass die unteren Brennerlanzen 34 eine geringere Einstecktiefe aufweisen als die darüber angeordneten oberen Brennerlanzen 32. Die Brennerlanzen 34 der zweiten Einstecktiefe sind beispielhaft vollständig unterhalb der Brennerlanzen 32 der ersten Einstecktiefe angeordnet. Die Brennerlanzen 32, 34 erstrecken sich jeweils in radialer Richtung des Schachtraums 12 in diesen hinein, wobei sich die tiefer eingesteckten Brennerlanzen 34 beispielhaft in etwa über zwei Drittel des Radius des Schachtraums 12 erstrecken. Die weniger tief eingesteckten Brennerlanzen 32 erstrecken sich beispielhaft in etwa über ein Drittel des Radius des Schachtraums 12. Über die Brennerlanzen 32, 34 wird gasförmiger, pulverförmiger oder flüssiger Brennstoff zusammen mit Primärluft in die Brennzone 20 aufgegeben. Die unterschiedlichen Einstecktiefen der Brennerlanzen 32, 34 führen zu einer unterschiedlichen Tiefe der aus den Brennerlanzen 32, 34 austretenden Flammen innerhalb der Brennerzone 20 und sorgen somit für eine gleichmäßige Erwärmung des Materials. Vorzugsweise sind über den Querschnitt des Schachtraums 12 eine Mehrzahl von in Fig. 1 nicht dargestellten Messsonden zur Temperaturmessung angeordnet. Mittels der in einer Ebene der Brennzone 20 erfassten Temperaturwerte kann eine gleichmäßige Temperaturverteilung über den Querschnitt der Brennzone 20 überprüft werden. Eine Überprüfung der Temperaturverteilung ist ebenfalls durch eine gezielte Materialprobenentnahme an der Austragsvorrichtung 23 möglich, wobei Materialproben aus dem inneren und dem äußeren Bereich des Schachtraums 12 überprüft werden.

Die Brennerlanzen 32, 34 weisen beispielsweise einen nicht dargestellten Kühlmantel zum Kühlen eines innerhalb des Kühlmantels angeordneten Brennerrohrs auf. Vorzugsweise wird der Kühlmantel von einer Kühlflüssigkeit durchströmt. Es ist ebenfalls denkbar, dass der Kühlmantel ohne Kühlflüssigkeit betrieben wird und aus einem hitzebeständigen Material ausgebildet ist.

Der Schachtofen 10 umfasst auch beispielhaft zwei Primärluftleitungen 36, 38 zum Leiten von Luft zu den Brennerlanzen 32, 34. Die Primärluftleitungen 36, 38 stehen mit jeweils einem Ventilator 40, 42, vorzugsweise einem Verdichter, in Verbindung, sodass die Luft durch die Primärluftleitungen 36, 38 in Richtung der Brennerlanzen beaufschlagt wird. Jede Primärluftleitung 36, 38 ist mit jeweils einer Ringleitung 44, 46 verbunden, die sich jeweils um den Umfang der Schachtwand 14 erstreckt. Die Ringleitungen 44, 46 sind beispielhaft oberhalb der Brennerlanzen 32, 34 angeordnet. Jede Ringleitung 44, 46 ist mit einer Mehrzahl von Brennerlanzen 32, 34 verbunden, wobei in Fig. 1 beispielhaft die Ringleitung 46, die oberhalb der Ringleitung 44 angeordnet ist, mit den Brennerlanzen 34 der größeren Einstecktiefe verbunden ist. Beispielhaft weist der Schachtofen eine erste Primärluftleitung 36 auf, die mit einer ersten Ringleitung 44 verbunden ist. Die untere, erste Ringleitung 44 ist beispielhaft ausschließlich mit den Brennerlanzen 32 der ersten Einstecktiefe verbunden, sodass Luft durch die erste Primärluftleitung 36 in die erste Ringleitung 44 und zu den Brennerlanzen 32 der ersten, geringeren Einstecktiefe strömt. Der Schachtofen weist auch eine zweite Primärluftleitung 38 auf, die mit einer zweiten Ringleitung 46 verbunden ist. Die obere, zweite Ringleitung 46 ist beispielhaft ausschließlich mit den Brennerlanzen 34 der zweiten Einstecktiefe verbunden, sodass Luft durch die zweite Primärluftleitung 38 in die zweite Ringleitung 46 und zu den Brennerlanzen 34 der zweiten, größeren Einstecktiefe strömt. An die zweite Primärluftleitung 38 ist eine Sauerstoffleitung 52 mit einem Sauerstoffeinlass 48 angeschlossen. Die Sauerstoffleitung 52 weist ein Ventil 50 zum Regeln der Menge an Sauerstoff auf. Die Sauerstoffleitung 52 ist mit der zweiten Primärluftleitung 38 verbunden, sodass Sauerstoff in die zweite Primärluftleitung 38 strömt. Die mit Sauerstoff angereicherte Primärluft strömt durch die zweite Primärluftleitung 38 in die obere, zweite Ringleitung 46 und anschließend in die Brennerlanzen 34 der zweiten, größeren Einstecktiefe. Die Menge an in die zweite Primärluftleitung 38 einströmenden Sauerstoff ist über das Ventil 50 einstellbar. Ausschließlich den Brennerlanzen 34 der zweiten Einstecktiefe wird Primärluft zugeführt, die mit Sauerstoff angereichert ist. Die Brennerlanzen 32 der ersten Einstecktiefe sind nicht mit dem Sauerstoffeinlass 48 verbunden. Vorzugsweise ist die durch die zweite Primärluftleitung strömende Verbrennungsluft derart mit Sauerstoff angereichert, dass das Gemisch aus Luft und Sauerstoff einen Sauerstoffgehalt von 40 bis 90% aufweist.

Es ist ebenfalls denkbar, dass die Brennerlanzen 32, 34 in mehr als zwei Ebenen oder nur einer Ebene angeordnet sind, wobei beispielsweise Brennerlanzen 32 der ersten Einstecktiefe und Brennerlanzen 34 der zweiten Einstecktiefe in einer Ebene gemeinsam angeordnet sind. Beispielweise weist der Schachtofen drei, vier oder fünf Ebenen von Brennerlanzen 32, 34 auf, wobei ausschließlich die Brennerlanzen 34 der größeren Einstecktiefe mit der Sauerstoffleitung 52 verbunden sind.

Im Betrieb des Schachtofens 10 wird zu brennendes Material über den Materialeinlass 16 von oben in den Schachtraum 12 aufgegeben und bewegt sich schwerkraftbedingt in vertikaler Richtung nach unten durch den Schachtraum 12 in Richtung der Austragsvorrichtung 23. Das Material wird dabei im Gegenstrom von Sekundärluft, bzw. Brennabgasen durchströmt. Die von unten durch die Lufteinlässe 28, 30 in den Schachtraum 12 eingelassene Sekundärluft wird in der Brennzone als Verbrennungsluft verwendet und dient zur Verbrennung eines durch die Brennerlanzen 32 ,34 in die Brennzone 20 aufgegeben Brennstoffs, wie beispielsweise Erdgas, Heizöl oder Kohlenstaub. Die Abgase der Verbrennung dienen der Vorwärmung des Materials in der Vorwärmzone 18 des Schachtraums 12. Im Anschluss an die Vorwärmzone 18 tritt das Material in die Brennzone 20 ein und wird dort gebrannt, beispielsweise. kalziniert und/oder gesintert. Anschließend wird es in der Kühlzone 22 durch die Sekundärluft gekühlt, wobei sich die Sekundärluft gleichzeitig erwärmt.

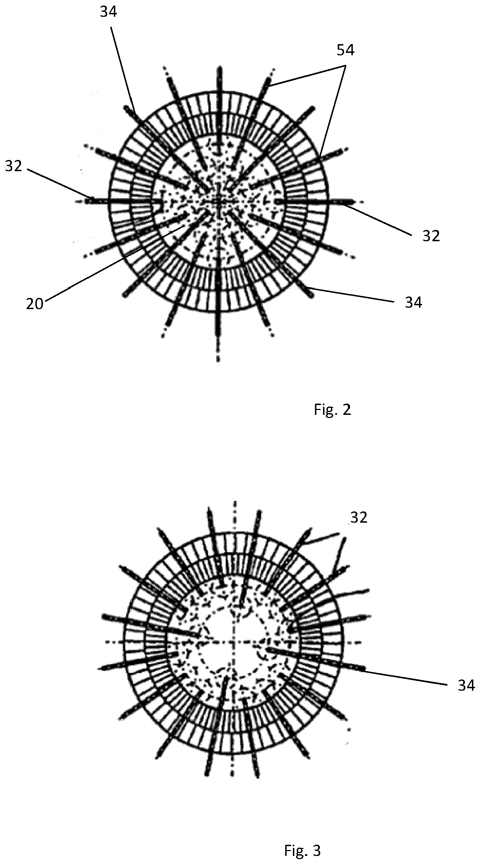

Fig. 2 und Fig. 3 zeigt jeweils einen Querschnitt durch den Schachtofen 10 gemäß Fig. 1, wobei unterschiedliche Anordnungen von Brennerlanzen 32, 34 gezeigt sind. Fig. 2 zeigt eine Mehrzahl von Brennerlanzen 32 einer ersten Einstecktiefe und eine Mehrzahl von Brennerlanzen 34 einer zweiten Einstecktiefe, die größer ist als die erste Einstecktiefe. Des Weiteren zeigt Fig. 2 beispielhaft noch eine Mehrzahl von Brennerlanzen 54 einer dritten Einstecktiefe, die geringer ist als die zweite und größer als die erste Einstecktiefe. Die Brennerlanzen 32, 34, 54 sind beispielhaft alle in einer Ebene und versetzt zueinander angeordnet. Beispielhaft wechseln sich die unterschiedlichen Einstecktiefen der Brennerlanzen 32, 34, 54 regelmäßig über den Umfang der Brennzone 20 ab.

Beispielsweise sind ausschließlich die Brennerlanzen 34 mit der Sauerstoffleitung 52 verbunden, wobei ausschließlich den Brennerlanzen 34 Sauerstoff, insbesondere mit Sauerstoff angereicherte Primärluft, zugeführt wird. Es ist außerdem denkbar, dass auch den Brennerlanzen 54 der dritten, mittleren Einstecktiefe Sauerstoff zugeführt wird, wobei die Menge an Sauerstoff, die den Brennerlanzen 54 der dritten Einstecktiefe zugeführt wird geringer sein kann als die Menge an Sauerstoff, die den Brennerlanzen 34 der zweiten Einstecktiefe zugeführt wird. Vorzugsweise wird den Brennerlanzen mit der größten Einstecktiefe die größte Menge an Sauerstoff zugeführt. Beispielhaft weist der Schachtofen 10 in der in Fig. 1 dargestellten Schnittebene zwölf Brennerlanzen 32 der ersten Einstecktiefe, vier Brennerlanzen 34 der zweiten Einstecktiefe und acht Brennerlanzen 54 der dritten Einstecktiefe auf. Dies ist lediglich beispielhaft, wobei jegliche Anzahl von Brennerlanzen 32, 34, 54 unterschiedlicher Einstecktiefen denkbar ist. Beispielsweise wiesen die Brennerlanzen des Schachtofens 10 drei, vier oder mehr unterschiedliche Einstecktiefen auf, wobei den Brennerlanzen mit der größten Einstecktiefe die größte Menge an Sauerstoff zugeführt wird. Beispielsweise weist der Schachtofen eine dritte Primärluftleitung auf, die mit einer weiteren Sauerstoffleitung verbunden ist. Die dritte Primärluftleitung ist vorzugsweise die mit einer dritten Ringleitung verbunden, wobei die dritte Ringleitung mit den Brennerlanzen 54 der dritten Einstecktiefe verbunden ist, sodass mit Sauerstoff angereicherte Primärluft durch die dritte Primärluftleitung zu den Brennerlanzen 54 dritter Einstecktiefe strömt.

Fig. 3 zeigt weitere Ausführungsbeispiele der Anordnung der Brennerlanzen 32, 34 der ersten und zweiten Einstecktiefe. Beispielhaft sind zwölf Brennerlanzen 32 der ersten Einstecktiefe und vier Brennerlanzen 34 der zweiten Einstecktiefe angeordnet. Den Brennerlanzen 34 der zweiten Einstecktiefe wird vorzugsweise mit Sauerstoff angereicherte Primärluft zugeführt, wobei den Brennerlanzen 32 der ersten Einstecktiefe Primärluft ohne Sauerstoffanreicherung zugeführt wird, sodass die den Brennerlanzen 32 der ersten Einstecktiefe zugeführte Primärluft einen geringeren Sauerstoffanteil aufweist als die den Brennerlanzen 34 der zweiten Einstecktiefe zugeführte Primärluft.

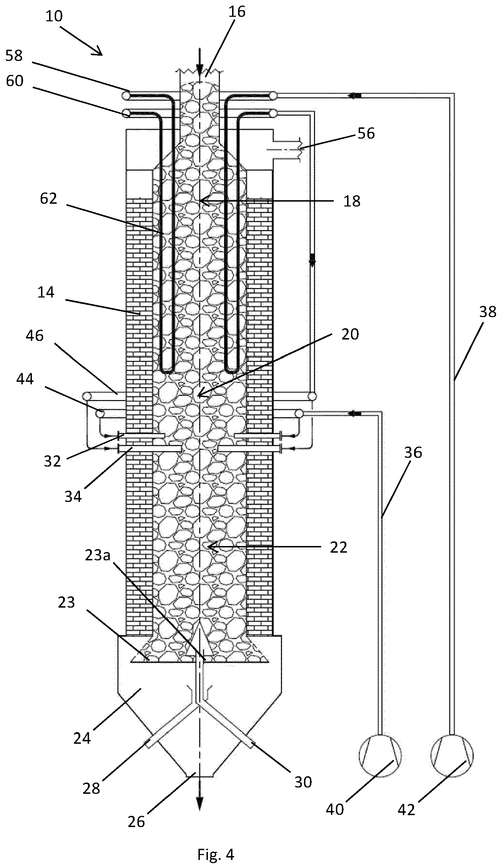

Fig. 4 zeigt einen Schachtofen 10, der zumindest zu einem großen Teil dem Schachtofen 10 der Fig. 1 entspricht, wobei gleiche Elemente mit gleichen Bezugszeichen gekennzeichnet sind. Der Schachtofen 10 weist zusätzlich einen Gasauslass 56 zum Auslassen des Abgases aus dem Schachtofen 10. Ein solcher Gasauslass 56 ist beispielsweise auch in dem Schachtofen 10 der Fig. 1 vorhanden. Im Unterschied zu dem Schachtofen der Fig. 1 weist der in Fig. 4 dargestellte Schachtofen eine zweite Primärleitung 38 auf, die teilweise durch die Vorwärmzone des Schachtraums 12 verläuft. Vorzugsweise umfasst die zweite Primärluftleitung 38 eine erste Ringleitung 58 und eine zweite unterhalb der ersten Ringleitung 58 angeordnete Ringleitung 60. Die Ringleitungen 58, 60 sind um den äußeren Umfang des Schachtraums 12 herum angeordnet. Die zweite Primärluftleitung weist beispielhaft eine Mehrzahl von Tauchleitungen 62 auf, die beispielsweise entweder U-förmig oder als Doppelrohr ausgebildet sind und sich von der ersten Ringleitung 58 durch die Vorwärmzone 18 zu der zweiten Ringleitung 60 erstrecken. Vorzugsweise erstrecken sich die Tauchleitungen 62 über einen Teil oder die gesamte Vorwärmzone 18. Die zweite Ringleitung 60 der zweiten Primärluftleitung 38 ist mit der Ringleitung 46 verbunden, sodass vorgewärmte Primärluft zu den Brennerlanzen 34 der zweiten Einstecktiefe strömt. Vorzugsweise wird ausschließlich den Brennerlanzen 34 der zweiten Einstecktiefe die vorgewärmte Primärluft zugeführt.

Im Betrieb des Schachtofens 10 wird ein Teil der in den Brenngasen enthaltenen Wärmeenergie für die Aufheizung der Primärluft verwendet, sodass ausschließlich den Brennerlanzen 34 der zweiten Einstecktiefe die vorgewärmte Primärluft zugeführt wird. Diese Aufheizung der Primärluft erfolgt innerhalb des Schachtraums 12, indem die Primärluft durch Tauchrohre 62 geführt wird, die beispielsweise in Umfangsrichtung des Schachtraums 12 vorzugsweise gleichmäßig auf den Schachtraumquerschnitt verteilt, in das Brennmaterial der Vorwärmzone 18 eintauchen. Vorzugsweise sind die Tauchrohre 62 identisch ausgebildet und sind vorzugsweise in gleichen Abständen zueinander angeordnet. Vorzugsweise weisen die Tauchrohre 62 ein Material auf, das eine hohe Wärmeleitfähigkeit aufweist. Die Anordnung der Tauchrohre 62 im Schachtraum 12 in direktem Kontakt mit dem Brenngut und den Brenngasen führt zu einer besonders guten Wärmeübertragung durch Wärmeleitung, Konvektion und Wärmestrahlung. Außerdem werden die Wärmeaustauschflächen der Tauchrohre 62 durch das unter Schwerkrafteinfluss an ihnen entlangströmende Brennmaterial selbsttätig gereinigt.

Eine Kombination der Ausführungsbeispiele der Figuren 1, 2, 3 und 4 ist ebenfalls denkbar. Beispielsweise weist die zweite Primärluftleitung 38 der Fig. 4 einen Sauerstoffeinlass zum Einlassen von Sauerstoff in die zweite Primärluftleitung 38 auf, sodass mit Sauerstoff angereicherte und vorgewärmte primäre Verbrennungsluft zu den Brennerlanzen 34 der zweiten Einstecktiefe geführt wird.

Die in den Figuren 2 und 3 gezeigten Querschnitte des Schachtofens 10 sind auch auf das in Fig. 4 dargestellte Ausführungsbeispiel des Schachtofens 10 anwendbar, wobei beispielsweise den Brennerlanzen 54 der dritten Einstecktiefe Primärluft einer geringeren Temperatur verglichen mit der den Brennerlanzen 34 der zweiten Einstecktiefe zugeführten Primärluft zugeführt wird. Beispielsweise wird den Brennerlanzen 54 der dritten Einstecktiefe Primärluft einer niedrigeren Temperatur verglichen mit der den Brennerlanzen 34 der zweiten Einstecktiefe zugeführten Primärluft zugeführt.

### Bezugszeichenliste

- 10: Schachtofen
- 12: Schachtraum
- 14: Schachtwand
- 16: Materialeinlass
- 18: Vorwärmzone
- 20: Brennzone
- 22: Kühlzone
- 23: Austragsvorrichtung
- 23a: Verdrängungskörper
- 24: Auslasstrichter
- 26: Materialauslass
- 28: Lufteinlass
- 30: Lufteinlass
- 32: Brennerlanze erster Einstecktiefe
- 34: Brennerlanze zweiter Einstecktiefe
- 36: erste Primärluftleitung
- 38: zweite Primärluftleitung
- 40: Ventilator
- 42: Ventilator
- 44: Ringleitung
- 46: Ringleitung
- 48: Sauerstoffeinlass
- 50: Ventil
- 52: Sauerstoffleitung
- 54: Brennerlanze dritter Einstecktiefe
- 56: Gasauslass
- 58: Ringleitung
- 60: Ringleitung
- 62: Tauchleitungen

## Patentansprüche

1. Schachtofen (10) zum Brennen von insbesondere karbonathaltigem Material aufweisend in Strömungsrichtung des Materials eine Vorwärmzone (18), mindestens eine Brennzone (20), eine Kühlzone (22), und einen Materialauslass (26) zum Auslassen des Materials aus dem Schachtofen (10),
eine Mehrzahl von Brennerlanzen (32, 34; 54), die in die Brennzone (20) hineinragen, wobei zumindest eine Brennerlanze (32) eine erste Einstecktiefen in die Brennzone (20) und zumindest eine weitere Brennerlanze (34) eine zweite Einstecktiefe in die Brennzone (20) aufweist, die größer ist als die erste Einstecktiefe,
zumindest eine Primärluftleitung (36, 38) zum Leiten von Verbrennungsluft, die mit zumindest einer Brennerlanze (32, 34; 54) in Verbindung steht,
**dadurch gekennzeichnet, dass**
der Schachtofen (10) eine Sauerstoffleitung (52) zum Leiten von Sauerstoff in die Brennzone (20) aufweist und die Sauerstoffleitung (52) derart angeordnet ist, dass Sauerstoff von der Sauerstoffleitung (52) zu zumindest einer Brennerlanze (34) der zweiten Einstecktiefe strömt,
wobei die Primärluftleitung (36, 38) eine erste Primärluftleitung (36) zum Leiten von Verbrennungsluft, die mit der Brennerlanze (32) der ersten Einstecktiefe in Verbindung steht und
eine zweite Primärluftleitung (38) zum Leiten von Verbrennungsluft umfasst, die mit der Brennerlanze (34) der zweiten Einstecktiefe in Verbindung steht und wobei die Sauerstoffleitung (52) ausschließlich mit der zweiten Primärluftleitung (38) verbunden ist, sodass Sauerstoff von der Sauerstoffleitung (52) in die zweite Primärluftleitung (38) strömt.

2. Schachtofen (10) nach Anspruch 1, wobei die Sauerstoffleitung (52) mit zumindest einer Brennerlanze (34) der zweiten Einstecktiefe in Verbindung steht, sodass Sauerstoff zur Verbrennung von Brennstoff in die Brennerlanze (34) strömt.

3. Schachtofen (10) nach einem der vorangehenden Ansprüche, wobei die Sauerstoffleitung (52) ausschließlich mit den Brennerlanzen (34) der zweiten Einstecktiefe verbunden ist.

4. Schachtofen (10) nach einem der vorangehenden Ansprüche, wobei die Sauerstoffleitung (52) ein Mittel (50) zum Regeln der Menge an durch die Sauerstoffleitung (52) strömendem Sauerstoff aufweist.

5. Schachtofen (10) nach einem der vorangehenden Ansprüche, wobei eine weitere Brennerlanze (54) eine dritte Einstecktiefe in die Brennzone (20) aufweist, die größer ist als die erste und geringer als die zweite Einstecktiefe und wobei die Sauerstoffleitung (52) mit zumindest einer Brennerlanze (54) der dritten Einstecktiefe in Verbindung steht, sodass Sauerstoff in die Brennlanze (54) strömt.

6. Schachtofen (10) nach Anspruch 4 und 5, wobei das Mittel (50) derart ausgebildet ist, dass die Menge an Sauerstoff zu der zumindest einen Brennerlanzen (34) der zweiten Einstecktiefe größer ist als die Menge an Sauerstoff zu der zumindest einen Brennerlanzen (54) der dritten Einstecktiefe.

7. Schachtofen (10) zum Brennen von insbesondere karbonathaltigem Material aufweisend in Strömungsrichtung des Materials eine Vorwärmzone (18), mindestens eine Brennzone (20), eine Kühlzone (22), und einen Materialauslass (26) zum Auslassen des Materials aus dem Schachtofen (10),
eine Mehrzahl von Brennerlanzen (32, 34; 54), die in die Brennzone (20) hineinragen, wobei zumindest eine Brennerlanze (32) eine erste Einstecktiefen in die Brennzone (20) und zumindest eine weitere Brennerlanze (34) eine zweite Einstecktiefe in die Brennzone (20) aufweist, die größer ist als die erste Einstecktiefe,
eine erste Primärluftleitung (36) zum Leiten von primärer Verbrennungsluft, die mit zumindest einer Brennlanze (32) der ersten Einstecktiefe in Verbindung steht und
eine zweite Primärluftleitung (38) zum Leiten von primärer Verbrennungsluft, die mit zumindest einer Brennerlanze (34) der zweiten Einstecktiefe in Verbindung steht, **dadurch gekennzeichnet, dass**
die zweite Primärluftleitung (38) zumindest teilweise durch eine Vorwärmeinrichtung zum Erwärmen der Luft in der Primärluftleitung (38) verläuft.

8. Schachtofen (10) nach Anspruch 7, wobei die Vorwärmeinrichtung die Vorwärmzone (18) innerhalb des Schachtofens (10) umfasst und die Primärluftleitung (38) zumindest teilweise durch Vorwärmzone (18) verläuft.

9. Schachtofen (10) nach Anspruch 7 oder 8, wobei die zweite Primärluftleitung (38) ausschließlich mit zumindest einer Brennerlanze (34) der zweiten Einstecktiefe verbunden ist, sodass die vorgewärmte primäre Verbrennungsluft ausschließlich Brennerlanzen (34) der zweiten Einstecktiefe zugeführt wird.

10. Schachtofen (10) nach Anspruch 7, 8 oder 9, wobei die zweite Primärluftleitung (38) eine Mehrzahl von Tauchleitungen (62) aufweist, die sich zumindest teilweise oder vollständig durch die Vorwärmzone (18) erstrecken.

11. Schachtofen (10) nach einem der vorangehenden Ansprüche, wobei die erste Einstecktiefe maximal ein Drittel des Radius der Brennzone (20), insbesondere etwa 5 bis 20cm, vorzugsweise 10 bis 15cm, beträgt und/oder wobei die zweite Einstecktiefe etwa ein Drittel des Radius der Brennzone (20), insbesondere etwa 40 bis 80cm, vorzugsweise 50 bis 70cm, insbesondere 60cm beträgt.

12. Verfahren zum Brennen von insbesondere karbonathaltigem Material in einem Schachtofen (10) wobei das Material durch eine Vorwärmzone (18), mindestens eine Brennzone (20), und eine Kühlzone (22) zu einem Materialauslass (26) strömt, wobei eine Brennstoffzufuhr in der Brennzone (20) oder angrenzend an diese über eine Mehrzahl von Brennlanzen (32, 34; 54) erfolgt, wobei zumindest eine Brennerlanze (32) eine erste Einstecktiefe und eine weitere Brennerlanze (34) eine zweite Einstecktiefe aufweist, die größer ist als die erste Einstecktiefe und wobei primäre Verbrennungsluft zu den Brennerlanzen (32, 34; 54) geleitet wird
**dadurch gekennzeichnet, dass**
Sauerstoff zusätzlich zu der primären Verbrennungsluft und/ oder in eine Primärluftleitung (38) zum Leiten von Verbrennungsluft zu den Brennerlanzen (34; 54) der zweiten Einstecktiefe geleitet wird.

13. Verfahren nach Anspruch 12, wobei die primäre Verbrennungsluft derart mit Sauerstoff angereichert wird, dass sie einen Sauerstoffgehalt von 40% bis 90% aufweist.

14. Verfahren zum Brennen von insbesondere karbonathaltigem Material in einem Schachtofen (10), wobei das Material durch eine Vorwärmzone (18), mindestens eine Brennzone (20) und eine Kühlzone (22) strömt, wobei eine Brennstoffzufuhr in der Brennzone (20) oder angrenzend an diese über eine Mehrzahl von Brennlanzen (32, 34; 54) erfolgt, wobei zumindest eine Brennerlanze (32) eine erste Einstecktiefe und eine weitere Brennerlanze (34) eine zweite Einstecktiefe aufweist, die größer ist als die erste Einstecktiefe und wobei primäre Verbrennungsluft zu den Brennerlanzen (32, 34; 54) geleitet wird, wobei die primäre Verbrennungsluft vorgewärmt wird **dadurch gekennzeichnet, dass**
die vorgewärmte primäre Verbrennungsluft ausschließlich den Brennerlanzen (34) der zweiten Einstecktiefe zugeführt wird.

15. Verfahren nach Anspruch 14, wobei die primäre Verbrennungsluft derart vorgewärmt wird, dass sie eine Temperatur von 250°C bis 500°C aufweist.

## Claims

1. A shaft furnace (10) for firing, in particular, carbonate-containing material, comprising, in the flow direction of the material, a preheating zone (18), at least one firing zone (20), a cooling zone (22), and a material outlet (26) for discharging the material from the shaft furnace (10),
a plurality of burner lances (32, 34; 54) which project into the firing zone (20), where at least one burner lance (32) has a first penetration depth into the firing zone (20) and at least one further burner lance (34) has a second penetration depth into the firing zone (20) which is greater than the first penetration depth,
at least one primary air conduit (36, 38) for conveying combustion air, which is connected to at least one burner lance (32, 34; 54),
**characterized in that**
the shaft furnace (10) comprises an oxygen conduit (52) for conveying oxygen into the firing zone (20) and the oxygen conduit (52) is arranged in such a way that oxygen flows from the oxygen conduit (52) to at least one burner lance (34) having the second penetration depth,
where the primary air conduit (36, 38) comprises a first primary air conduit (36) for conveying combustion air which is connected to the burner lance (32) having the first penetration depth and
a second primary air conduit (38) for conveying combustion air which is connected to the burner lance (34) having the second penetration depth and the oxygen conduit (52) is connected exclusively to the second primary air conduit (38) so that oxygen flows from the oxygen conduit (52) into the second primary air conduit (38).

2. The shaft furnace (10) as claimed in claim 1, wherein the oxygen conduit (52) is connected to at least one burner lance (34) having the second penetration depth, so that oxygen for combustion of fuel flows into the burner lance (34).

3. The shaft furnace (10) as claimed in either of the preceding claims, wherein the oxygen conduit (52) is connected exclusively to the burner lances (34) having the second penetration depth.

4. The shaft furnace (10) as claimed in any of the preceding claims, wherein the oxygen conduit (52) comprises a means (50) for regulating the amount of oxygen flowing through the oxygen conduit (52).

5. The shaft furnace (10) as claimed in any of the preceding claims, wherein a further burner lance (54) has a third penetration depth into the firing zone (20) which is greater than the first and less than the second penetration depth and the oxygen conduit (52) is connected to at least one burner lance (54) having the third penetration depth so that oxygen flows into the burner lance (54).

6. The shaft furnace (10) as claimed in claim 4 and 5, wherein the means (50) is configured so that the amount of oxygen to the at least one burner lance (34) having the second penetration depth is greater than the amount of oxygen to the at least one burner lance (54) having the third penetration depth.

7. A shaft furnace (10) for firing, in particular, carbonate-containing material, comprising, in the flow direction of the material, a preheating zone (18), at least one firing zone (20), a cooling zone (22), and a material outlet (26) for discharging the material from the shaft furnace (10),
a plurality of burner lances (32, 34; 54) which project into the firing zone (20), where at least one burner lance (32) has a first penetration depth into the firing zone (20) and at least one further burner lance (34) has a second penetration depth into the firing zone (20) which is greater than the first penetration depth,
a first primary air conduit (36) for conveying primary combustion air which is connected to at least one burner lance (32) having the first penetration depth and
a second primary air conduit (38) for conveying primary combustion air which is connected to at least one burner lance (34) having the second penetration depth, **characterized in that**
the second primary air conduit (38) runs at least partly through a preheating device for heating the air in the primary air conduit (38).

8. The shaft furnace (10) as claimed in claim 7, wherein the preheating device comprises the preheating zone (18) within the shaft furnace (10) and the primary air conduit (38) runs at least partly through the preheating zone (18).

9. The shaft furnace (10) as claimed in claim 7 or 8, wherein the second primary air conduit (38) is connected exclusively to at least one burner lance (34) having the second penetration depth, so that the preheated primary combustion air is fed exclusively to burner lances (34) having the second penetration depth.

10. The shaft furnace (10) as claimed in claim 7, 8 or 9, wherein the second primary air conduit (38) comprises a plurality of immersion conduits (62) which extend at least partly or completely through the preheating zone (18).

11. The shaft furnace (10) as claimed in any of the preceding claims, wherein the first penetration depth is not more than one third of the radius of the firing zone (20), in particular from about 5 to 20 cm, preferably from 10 to 15 cm, and/or the second penetration depth is about one third of the radius of the firing zone (20), in particular from about 40 to 80 cm, preferably from 50 to 70 cm, in particular 60 cm.

12. A process for firing, in particular, carbonate-containing material in a shaft furnace (10), where the material flows through a preheating zone (18), at least one firing zone (20) and a cooling zone (22) to a material outlet (26), where an introduction of fuel occurs in the firing zone (20) or adjacent thereto via a plurality of burner lances (32, 34; 54), where at least one burner lance (32) has a first penetration depth and a further burner lance (34) has a second penetration depth which is greater than the first penetration depth and where primary combustion air is conveyed to the burner lances (32, 34; 54), **characterized in that**
oxygen is conveyed in addition to the primary combustion air and/or into a primary air conduit (38) for conveying combustion air to the burner lances (34; 54) having the second penetration depth.

13. The process as claimed in claim 12, wherein the primary combustion air is enriched with oxygen so that it has an oxygen content of from 40% to 90%.

14. A process for firing, in particular, carbonate-containing material in a shaft furnace (10), where the material flows through a preheating zone (18), at least one firing zone (20) and a cooling zone (22), where an introduction of fuel occurs into the firing zone (20) or adjacent thereto via a plurality of burner lances (32, 34; 54), where at least one burner lance (32) has a first penetration depth and a further burner lance (34) has a second penetration depth which is greater than the first penetration depth and where primary combustion air is conveyed to the burner lances (32, 34; 54), where the primary combustion air is preheated,
**characterized in that**
the preheated primary combustion air is fed exclusively to the burner lances (34) having the second penetration depth.

15. The process as claimed in claim 14, wherein the primary combustion air is preheated so that it has a temperature of from 250°C to 500°C.

## Revendications

1. Four à cuve (10) destiné au brûlage d'une matière notamment carbonatée, ledit four à cuve comportant, dans le sens d'écoulement de la matière, une zone de préchauffage (18), au moins une zone de brûlage (20), une zone de refroidissement (22), et une sortie de matière (26) permettant à la matière de sortir du four à cuve (10),
une pluralité de lances de brûleur (32, 34 ; 54) qui font saillie dans la zone de brûlage (20), au moins une lance de brûleur (32) présentant une première profondeur d'insertion dans la zone de brûlage (20) et au moins une autre lance de brûleur (34) présentant une deuxième profondeur d'insertion dans la zone de brûlage (20) qui est supérieure à la première profondeur d'insertion,
au moins une conduite d'air primaire (36, 38) qui est destinée à conduire l'air de brûlage et qui est reliée à au moins une lance de brûleur (32, 34 ; 54), **caractérisé en ce que**
le four à cuve (10) comporte une conduite d'oxygène (52) destinée à conduire de l'oxygène jusque dans la zone de brûlage (20) et la conduite d'oxygène (52) est disposée de manière à ce que l'oxygène s'écoule de la conduite d'oxygène (52) vers au moins une lance de brûleur (34) de la deuxième profondeur d'insertion,
la conduite d'air primaire (36, 38) comprenant une première conduite d'air primaire (36) qui est destinée à conduire l'air de brûlage et qui est reliée à la lance de brûleur (32) de la première profondeur d'insertion et une deuxième conduite d'air primaire (38) qui est destinée à conduire l'air de brûlage et qui est reliée à la lance de brûleur (34) de la deuxième profondeur d'insertion et la conduite d'oxygène (52) étant reliée exclusivement à la deuxième conduite d'air primaire (38) de sorte que l'oxygène s'écoule de la conduite d'oxygène (52) jusque dans la deuxième conduite d'air primaire (38).

2. Four à cuve (10) selon la revendication 1, la conduite d'oxygène (52) étant reliée à au moins une lance de brûleur (34) de la deuxième profondeur d'insertion de sorte que l'oxygène s'écoule dans la lance de brûleur (34) pour brûler le combustible.

3. Four à cuve (10) selon l'une des revendications précédentes, la conduite d'oxygène (52) étant reliée exclusivement aux lances de brûleur (34) de la deuxième profondeur d'insertion.

4. Four à cuve (10) selon l'une des revendications précédentes, la conduite d'oxygène (52) comportant des moyens (50) destinés à réguler la quantité d'oxygène qui s'écoule à travers la conduite d'oxygène (52).

5. Four à cuve (10) selon l'une des revendications précédentes, une autre lance de brûleur (54) présentant une troisième profondeur d'insertion dans la zone de brûlage (20) qui est supérieure à la première, et inférieure à la deuxième, profondeur d'insertion et la conduite d'oxygène (52) étant reliée à au moins une lance de brûleur (54) de la troisième profondeur d'insertion de sorte que l'oxygène s'écoule jusque dans la lance de brûleur (54).

6. Four à cuve (10) selon les revendications 4 et 5, le moyen (50) étant conçu de manière à ce que la quantité d'oxygène amenée à au moins une lance de brûleur (34) de la deuxième profondeur d'insertion soit supérieure à la quantité d'oxygène amenée à l'au moins une lance de brûleur (54) de la troisième profondeur d'insertion.

7. Four à cuve (10) destiné au brûlage de matière notamment carbonatée, ledit four à cuve comportant, dans le sens d'écoulement de la matière, une zone de préchauffage (18), au moins une zone de brûlage (20), une zone de refroidissement (22), et une sortie de matière (26) permettant à la matière de sortir du four à cuve (10),
une pluralité de lances de brûleur (32, 34 ; 54) qui font saillie dans la zone de brûlage (20),
au moins une lance de brûleur (32) présentant une première profondeur d'insertion dans la zone de brûlage (20) et au moins une autre lance de brûleur (34) présentant une deuxième profondeur d'insertion dans la zone de brûlage (20) qui est supérieure à la première profondeur d'insertion,
une première conduite d'air primaire (36) destinée à conduire l'air de brûlage primaire, qui est reliée à au moins une lance de brûlage (32) de la première profondeur d'insertion, et
une deuxième conduite d'air primaire (38) qui est destinée à conduire l'air de brûlage primaire et qui est reliée à au moins une lance de brûleur (34) de la deuxième profondeur d'insertion,
**caractérisé en ce que**
la deuxième conduite d'air primaire (38) s'étend au moins partiellement à travers un dispositif de préchauffage destiné à chauffer l'air dans la conduite d'air primaire (38).

8. Four à cuve (10) selon la revendication 7, le dispositif de préchauffage comprenant la zone de préchauffage (18) à l'intérieur du four à cuve (10) et la conduite d'air primaire (38) s'étendant au moins partiellement à travers la zone de préchauffage (18).

9. Four à cuve (10) selon la revendication 7 ou 8, la deuxième conduite d'air primaire (38) étant reliée exclusivement à au moins une lance de brûleur (34) de la deuxième profondeur d'insertion de sorte que l'air de brûlage primaire préchauffé est amené exclusivement aux lances de brûleur (34) de la deuxième profondeur d'insertion.

10. Four à cuve (10) selon la revendication 7, 8 ou 9, la deuxième conduite d'air primaire (38) comportant une pluralité de conduites plongeantes (62) qui s'étendent au moins partiellement ou complètement à travers la zone de préchauffage (18).

11. Four à cuve (10) selon l'une des revendications précédentes, la première profondeur d'insertion étant égale au maximum à un tiers du rayon de la zone de brûlage (20), en particulier étant environ de 5 à 20 cm, de préférence de 10 à 15 cm, et/ou étant égale environ à un tiers du rayon de la zone de brûlage (20), notamment étant environ de 40 à 80 cm, de préférence de 50 à 70 cm, en particulier de 60 cm.

12. Procédé de brûlage de matière notamment carbonatée dans un four à cuve (10), la matière s'écoulant à travers une zone de préchauffage (18), au moins une zone de brûlage (20) et une zone de refroidissement (22) vers une sortie de matière (26), l'amenée de combustible étant effectuée dans la zone de brûlage (20) ou de manière adjacente à celle-ci par le biais d'une pluralité de lances de brûleur (32, 34 ; 54), au moins une lance de brûleur (32) présentant une première profondeur d'insertion et une autre lance de brûleur (34) présentant une deuxième profondeur d'insertion qui est supérieure à la première profondeur d'insertion et l'air de brûlage primaire étant conduit vers les lances de brûleur (32, 34 ; 54),
**caractérisé en ce que**
l'oxygène est conduit en plus vers l'air de brûlage primaire et/ou jusque dans une conduite d'air primaire (38) destinée à conduire l'air de brûlage vers les lances de brûleur (34 ; 54) de la deuxième profondeur d'insertion.

13. Procédé selon la revendication 12, l'air de brûlage primaire étant enrichi en oxygène de façon à avoir une teneur en oxygène de 40 % à 90 %.

14. Procédé de brûlage de matière notamment carbonatée dans un four à cuve (10), la matière s'écoulant à travers une zone de préchauffage (18), au moins une zone de brûlage (20) et une zone de refroidissement (22), une amenée de combustible étant effectuée dans la zone de brûlage (20) ou de manière adjacente à celle-ci par le biais d'une pluralité de lances de brûleur (32, 34 ; 54), au moins une lance de brûleur (32) présentant une première profondeur d'insertion et une autre lance de brûleur (34) présentant une deuxième profondeur d'insertion qui est supérieure à la première profondeur d'insertion et l'air de brûlage primaire étant dirigé vers les lances de brûleur (32, 34 ; 54), l'air de brûlage primaire étant préchauffé,
**caractérisé en ce que**
l'air de brûlage primaire préchauffé est amené exclusivement aux lances de brûleur (34) de la deuxième profondeur d'insertion.

15. Procédé selon la revendication 14, l'air de brûlage primaire étant préchauffé de manière à avoir une température de 250 °C à 500 °C.
